# EUROPEAN PATENT SPECIFICATION

(11) **EP 4 153 873 B1**
(45) Date of publication and mention of the grant of the patent: **14.08.2024**
(21) Application number: 21734035.5
(22) Date of filing: 18.05.2021
(51) Int. Cl.: F16B 2/18, E04D 15/00, E04G 21/32, F16B 45/00, F16B 5/06

(54) **ROOF-ANCHORING SYSTEMS AND METHODS**
DACHVERANKERUNGSSYSTEME UND -VERFAHREN
SYSTÈMES ET PROCÉDÉS D'ANCRAGE DE TOIT

(30) Priority: 18.05.2020 US 202016876674
(43) Date of publication of application: 29.03.2023
(73) Proprietor: Ballantyne Gear, Inc, McKinney, TX 75071 (US)
(72) Inventor: BALLANTYNE, Flent D., McKinney, TX 75051 (US)
(74) Representative: Carpmaels & Ransford LLP
(86) International application number: PCT/US2021/032895
(87) International publication number: WO 2021/236592

(56) References cited:
- WO-A1-2013/125945
- WO-A1-99/49154
- US-A1- 2010 108 442

## Description

### CROSS-REFERENCE TO RELATED APPLICATIONS

This patent application claims the benefit of U.S. Patent Application No. 16/876,674 filed May 18, 2020, which is a continuation-in-part of U.S. Patent Application No. 15/906,113 filed February 27, 2018.

### RELATED ART

Different types and configurations of anchorages and anchorage systems are used for fall restraint, fall arrest, and rope access in construction, repair, inspection and other industries. Such systems are configured to prevent injury or death by restraining a person from falling and/or arresting a fall, and also used to assist with rope access.

For example, WO9949154 illustrates a safety system (for roof workers) that includes roof fixing means adapted to be connected to a roof edge of one side of the roof along with a harness worn by a roof worker located on the opposite side of the roof. A safety rope is used to connect the harness to the roof fixing means. The roof fixing means may be structured as a roof anchor with a hook (which, in operation, hooks or fastens to the lower edge of the roof cladding or rooftop - such as metal sheet - or roofing tile). A clamping bolt fixes the roof anchor to the cladding.

U.S. 8,292,030 teaches an anchoring system in which the roof fixing means may be structured as a wheeled "hook member" that is adapted to be mounted to an eave or similar roof structure. The described hook member has a tether affixed to the hook body. The shortcoming of the described design stems from the possibility that the hook member, once mounted on the roof, can possibly move or become dislodged if the tether attached becomes loose from stretching, incorrect installation, lack of proper maintenance or any other reason and then the hook body is pulled or otherwise abruptly moved from a pull or abrupt motion from the tether that is attached to the anchoring hook. If the anchoring hook body becomes dislodged, a user is vulnerable to the risk of a serious or fatal fall.

Known to-date systems and mechanisms of related art are rather complex and difficult to cooperate with the roof, while the preparation to employing these systems is time consuming and may cause permanent damage or unattractive modification to at least a portion of the roof.

### SUMMARY

Embodiments of the invention provide a method for forming and maintaining a secure attachment to a roof of a building and to prevent detrimental and/or damaging outcomes to persons and property. This method includes a step of positioning a first wheeled roof-anchoring device at or near a first edge of the roof such that a first set of wheels with a corresponding first axle are located under and in a first tensioned contact with the first edge (while a second set of wheels with a corresponding second axle are in contact with and on the roof and a first connector pivotally attached to the second axle is under tension due to a first force pulling such first connector away from the second axle along - for example, up - the roof). Here, the first roof-anchoring device includes a first arched body having first and second ends, the first axle with the first set of wheels juxtaposed with the first arched body at the first end, the second axle with the second set of wheels juxtaposed with the first arched body at the second end, and the first connector. The method additionally includes a step of disposing a second wheeled roof-anchoring device near a second edge of the roof such that a third set of wheels with a corresponding third axle are located under and in a second tensioned contact with the second edge (while a fourth set of wheels with a corresponding fourth axle are in contact with and on the roof and a second connector pivotally attached to the fourth axle is under tension due to a second force pulling such second connector away from the fourth axle and along - for example, up - the roof). Here, the second roof-anchoring device includes a second arched body having third and fourth ends, the third axle with the third set of wheels juxtaposed with the second arched body at the third end, the fourth axle with the fourth set of wheels juxtaposed with the second arched body at the fourth end, and the second connector. Notably, the said first and second connectors are linked with a tether line under strain chosen to maintain the first and second tensioned contacts while preventing the first and third sets of wheels from moving away from first and second edges of the roof.

Generally, the method may additionally include at least one of the steps of
- configuring said tether line such that the step of preventing the first set of wheels from moving substantially relative to the first edge of the roof is caused only by the tensioned contact of the third set of wheels with the second edge of the roof, and the step of preventing the third set of wheels from moving substantially relative to the second edge of the roof is caused only by the tensioned contact of the first set of wheels with the first edge of the roof;
- disengaging at least one of the first and second wheeled devices from a stopper disposed below or under an axle of such at least one of the first and second devices to cause said stopper to fall from a corresponding edge of the roof;
- attaching a connecting element between a user's harness and a lifeline or an element of the user's harness to the lifeline to permit at least one of sliding and anchoring of the respective element over and along the lifeline from every first point of the lifeline to every second point of the lifeline, both the first point and the second point defined between the attachment of the lifeline to the tether line and the opposite end of the lifeline;
- attaching a connecting element between a user's lifeline and the tether line or support line, or an element of the user's lifeline to the tether line or support line to permit at least one of sliding and anchoring of the respective element over and along the tether line from every first point of the tether line to every second point of the tether line, both the first point and the second point defined between the between the first and second connectors of the first and second anchoring devices.

The attachment of the slidable and anchorable element of the harness to a lifeline, combined with the attachment of the slidable and anchorable element of the lifeline to a tether line or support line constituent to the anchor device is significant, since a person that works at a high risk job, such as cleaning rain gutters or installing Christmas lights is required le to work along the edge of the roof and is at a high risk of falls. Using a rope grab as the harness element and also using another rope grab as the lifeline element, with a rope grab that will slide freely in one direction and will only go in the reverse direction with deliberate actions to the rope grab, a person can attach their lifeline to a tether line, common tether line or support line that is parallel to a roof edge, and using the slidable and anchorable element of the harness to the lifeline, he can adjust the length of his lifeline so he is able to reach the edge where he is working and not be at risk of falling from this working edge. When a person working on the roof edge moves along the working roof edge, the lifeline element will slide along the tether line or support line and will follow the person. However, if the user is working on a sloped roof edge he will have two fall hazards, he can fall off the edge where he is working and he can roll down the slope and fall off an edge that is axially connected to the edge where the user is working. The element of the harness to the lifeline will prevent the person from falling off the roof edge where the person is working and if the person starts to slide down the slope of the roof, the harness element will prevent the person from sliding down the lifeline and the lifeline element will prevent the lifeline from sliding down the tether line.

In one implementation of the method, the step of disposing includes disposing the second roof-anchoring device near or at the second edge that is opposite to the first edge. In a related and non-exclusive implementation, at least one of the steps of positioning and disposing includes at least one of the following: a) locating a chosen roof-anchoring device, from the first and second roof-anchoring devices, on the roof such that all wheels of such chosen device are in contact with a rooftop; and causing such chosen device to wheel to a corresponding edge of the roof, from the first and second edges of the roof, at least until a set of wheels of the chosen device closest to the corresponding edge loses contact with the roof; b) repositioning the chosen device along a wall of the building up towards the roof until an axle - to which a corresponding connector (from the first and second connectors) is attached - is positioned above the corresponding edge of the roof while a set of wheels on an axle opposite to the corresponding connector is under and in contact with an edge of the roof; and c) pivoting at least one of the first and second connectors at two locations with respect to a corresponding axle. Alternatively or in addition, the method may further include one of the following: i) after the steps of locating and causing, wheeling the chosen roof-anchoring device up the roof to pull the set of wheels that has lost contact with the roof under the roof in a tensioned contact with the corresponding edge; and ii) wheeling the chosen device such that an axle at a side of the chosen device with the corresponding connector travels along the roof away from the corresponding edge to pull an axle that is opposite to the corresponding connector under the roof in the tensioned contact with the corresponding edge. Additionally or in the alternative - and also with respect to this latter case - the step of locating may include placing a stopper on the roof between the corresponding edge and the axle closest to the corresponding edge; and engaging the wheels on said axle closest to the corresponding edge with the stopper to prevent further movement of the chosen device towards the corresponding edge.

Furthermore, the method may additionally include the step of positioning a third wheeled roof-anchoring device at or near a third edge of the roof such that a fifth set of wheels with a corresponding fifth axle are located under and in a third tensioned contact with the third edge (while a sixth set of wheels with a corresponding sixth axle are in contact with and on the roof and a third connector pivotally attached to the sixth axle is under tension due to a third force pulling the third connector away from the sixth axle, up the roof). Here, a structure of the third roof-anchoring device may be substantially equivalent to a structure of the first roof-anchoring device, and the third force is caused as a result of tensioned attachment of an element of the third roof-anchoring device to the tether line at a support point between the first and second roof-anchoring devices with the use of a support line, that is transverse to the tether line. Alternatively or in addition, the method may include i) attaching a first connecting element between a user's harness and the tether line or a first element of the user's harness to the tether line, and ii) attaching a second connecting element between the user's harness and said support line or a second element of the user's harness to the support line in order to permit at least one of a) one of sliding of a respective element over and along the tether line from every point of the tether line to every other point of the tether line between an end of the tether line and a support point, and anchoring the respective element at the tether line between the end of the tether line and the support point; and b) one of sliding of the other respective element over and along the support line from every point of the support line to every other point of the support line between an end of the support line and the support point, and anchoring the other respective element at the support line between the end of the support line and the support point.

### BRIEF DESCRIPTION OF THE DRAWINGS

Advantages of embodiments of the present invention will be apparent from the following detailed description of the several not-mutually-exclusive embodiments, which description should be reviewed with references to the accompanying drawings, in which:
FIG. 1 is a perspective view of an improved wheeled roof-anchor or an "eave hook" system featuring a connector that is pivotally attached to an axle.
FIG. 2 is a bottom perspective view of the embodiment of FIG. 1.
FIG. 3 is a perspective view of the embodiment of the connector depicted in FIGs. 1 and 2;
FIGs. 4A and 4B are perspective views of a stop member, used in cooperation with a roof-anchoring device such as that depicted in FIGs. 1 and 2.
FIG. 5A shows the stop member coupled to (in operational juxtaposition with) an embodiment of the anchoring device, while FIG. 5B illustrates a situation in which the stopper member is separating from the embodiment of the anchoring device. FIGs. 5C, 5D, 5E illustrate additional and/or related steps of tensioned attachment of the anchoring device in cooperation with the roof edge.
FIG. 6 provides a bottom view of a related embodiment of a connector of the roof-anchoring device, that is attached to an axle of the anchoring member in two places (for clarity, the wheels are not shown on the axle in FIG. 6).

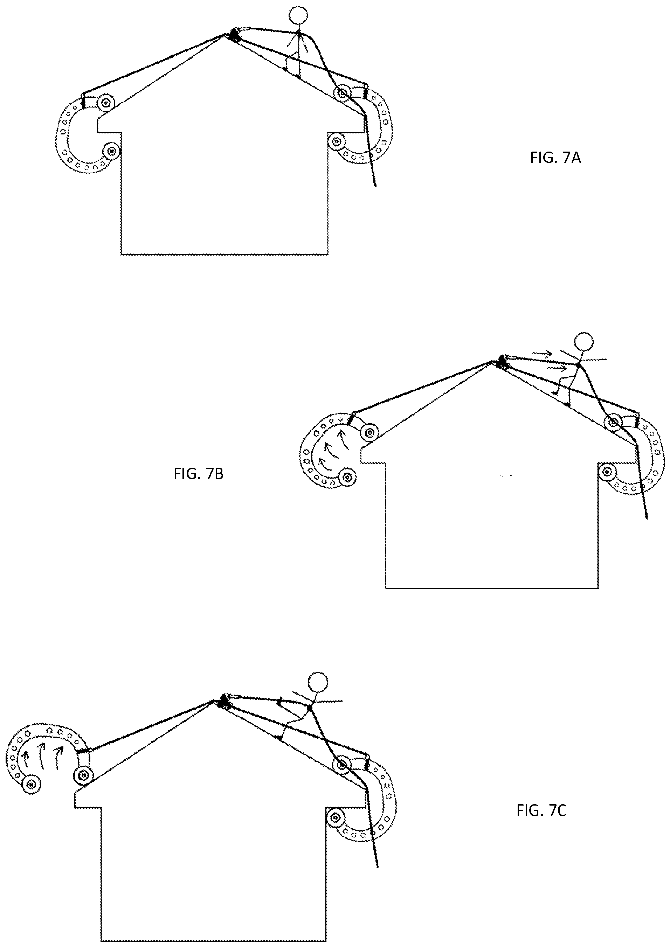

FIG. 7A, 7B, 7C show an example of operational deficiency of using an anchoring device of related art with a tether attached to the arched body of the device (instead of the connector, as per the idea of the invention). A large force, suddenly applied to the anchoring device through the attached tether or a connector and a tether to the arched body - as might be expected when a user of the anchoring device attached to eave of the roof on the side of the house opposite to a part of the roof where the user is standing - creates a non-zero torque shown to cause the anchoring device to detach from the eave and make the user lose support on the roof.
FIGs. 8A, 8B are schematic illustrations of the process for forming and maintaining a secure attachment to the roof of a building.
FIGs. 9A, 9B provide additional simplified schematics in support of the process described in reference to FIGs. 8A, 8B: standard attachment of an additional anchor device on the second side of the roof ith the use of a progress capture type device and utilizing a single tether.
FIGs. 10A, 10B show non-limiting related implementations of the secure attachment to the roof.

In the Drawings, generally, like elements and/or components may be referred to by like numerals and/or other identifiers; not all elements and/or components shown in one drawing may be necessarily depicted in another, for simplicity of illustrations.

### DETAILED DESCRIPTION OF THE INVENTION

Roof-anchoring systems of related art do not allow a worker on the roof to be, on the one hand, securely connected to the roof to prevent falling to the ground and, on the other hand, to move about the roof, regardless of the length of the link that is between the harness of the worker and the system of anchoring to the roof. The problem of operationally-inadmissible dislodging of a roof anchor, mounted to the eave (or edge, or overhang portion) of the roof with one of its wheel axles under the eave, as a result of a movement of the tether connected with such roof anchor at its opposite end is solved by tensionally straining such roof anchor against a second roof anchor that has been also mounted to another eave of the roof to form a specific anchor assembly. Such anchor assembly is structured as a system of multiple anchor devices, the respectively-corresponding single tether connecting two or more anchor devices, or tethers of which are substantially directly attached to one another at a predetermined location(s) with two or more anchor devices (configured according to the idea of the invention), with the tether line or tether lines along the roof between constituent anchors, each of which is meanwhile securely fastened to a corresponding eave of the roof due to tensile stress caused by its being connected to another anchor. Supporting tether lines can also come from the sides of the tensioned tethers, attaching axially to reinforce the original tensioned tethers and attached to another anchoring device. The location of a substantial direct attachment between the constituent, individual tethers (that, when attached to one another, form a joined or common tether line) can be varied at the discretion of the user and may be generally chosen away from the summit (ridge) of the roof - that is, on one of the roof slopes. As a result of attaching the tether line or lines of constituent anchors together substantially directly while avoiding and not forming a point of fastening of the common tether line with the roof, the user of the anchor assembly (a worker on the roof) gains an advantage of having a point of attachment of an element of the worker's lifeline to the tether line (common tether line or support line, as used interchangeably herein) connecting the different anchors to be repositionably (for example, in a sliding fashion) moved along the such common tether line if desired. This may be achieved by removably attaching a user's lifeline element (a rope grab, carabiner, snap hook, ring, or a similar device, for example) to the common tether line such as to allow this lifeline element to slidingly move along and over the common tether line to substantially any location of the common tether line between the constituent anchors while optionally avoiding a fixation of the lifeline element at any predetermined location, if preferred, or anchoring to any location along such line.

Notably, the formation of such common tether line does not prevent the user from additionally fastening the common tether line to the roof at substantially any point along the tether line, if desired, and change a location of such fastening when desired. In this specific case, the extent of relocation of the element coming from the lifeline along the common tether line is defined by a stretch of the common tether line between a constituent anchor and the location of fastening. Attachments to the tether lines from other connections or obstacles may also stop the sliding relocation but methods can be used to transfer across these obstacles.

The user of the anchor assembly (a worker on the roof) gains an additional advantage of having a point of attachment of an element of his harness to the lifeline, lifeline to be repositionably (for example, in a sliding fashion) moved along the lifeline, if desired. This may be achieved by removably attaching a user's harness element (a rope grab, carabiner, snap hook, ring or similar device, for example) to the lifeline, such as to allow this harness element to slidingly move along and over the lifeline, to substantially any location of the lifeline, between the attachment of the lifeline to the tether line, common tether line or support line while optionally avoiding a fixation of the lifeline element at any predetermined location, if preferred, or anchoring to any location along such line.

The term "exemplary" when used herein is defined to mean "serving as an example, instance, or illustration." Accordingly, any embodiment referred to as "exemplary" is not to be construed as preferred or advantageous over other embodiments.

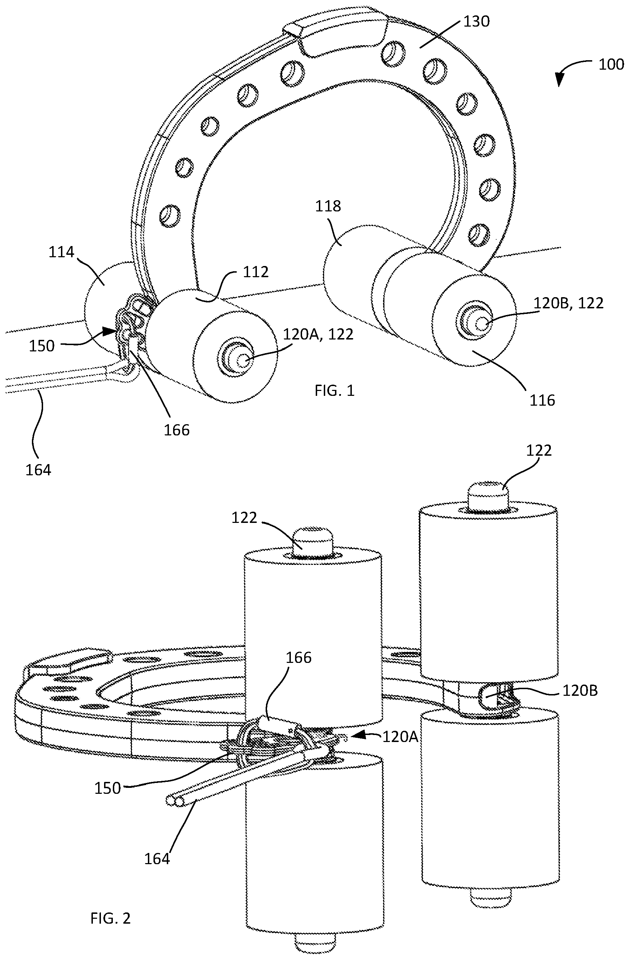

To this end, FIGS. 1 and 2 illustrate an embodiment of a mobile "eave hook" device or anchor 100, shown in this example as having four wheels 112, 114, 116 and 118, arranged in two pairs on respectively-corresponding axles. (Depending on the specifics of a particular implementation, a different number of wheels can be employed.) The wheels can generally be made of any desired materials such as rubber or plastic, for example, and may also have a surface configured to be slide-resistant.

Wheel axles 120A and 120B in one case can be capped with caps 122 and interconnected with one another through an arched anchor or lever or anchor body 130 that extends continuously from the axle 120A to the axle 120B, forming an open hook used for engaging a roof projection (for example, a roof eave) as discussed below. The arched anchor or hook 130 may be constructed of any relatively strong material such as steel, for example, and preferably dimensioned to form a generally asymmetrical "C" (with the curvature of the body 130 at one end being different from that at the other end). For example, as shown in FIG. 1, the end of arched anchor or hook 130 that attaches to wheel axle 120B is more curved than the end attached to the wheel axle 120A.

Now in reference to FIGs. 1, 2, and 3, the embodiment of the anchoring device is equipped with a connector 150 (which is including multiple through openings 152, 154, 156, 158, 160) that is pivotally attached to an axle (as shown - to axle 120A) through and at one of the openings of the connector 150 - to which a tether 164 (a strap, a rope, a rod, a cord, a chain, for example) or another connector or different device may be attached directly or indirectly, and preferably to the opening that is closest to the roof when installed.

As shown in FIGS. 1 and 2, the tether 164 may be optionally removably coupled with the connector 150 of the anchoring member 100 via at least one snap hook, carabiner, tensioner, or similar intermediate link/s 166 (which is then in turn optionally removably connected to the pivotally attached connector 150. However, it may also be desirable to couple the tether 164 directly to the connector 150 without the use of intermediary link(s). Analysis of practical use and operation of the embodiment 100 for the purposes of securing a user on the roof has shown that utilizing the connector 150 pivotally-attached to and on the axle 120A in conjunction with the tether 164 or the combination of the tether 164 with the intermediate link 166 removes the risk of pulling or otherwise dislodging the device 100 anchored to the roof, away from the location at which the device 100 is attached to an eave or similar structure, as a result of a sudden and moderate to large force applied to an attachment of the tether to the body of the anchoring device, above the set of wheels that are sitting on the rooftop within an installed anchoring system where the wheels that are below the soffit are hanging a few inches (1 inch= 2,54 cm) below the soffit, as a result of improper installation, relaxing of the ropes without proper maintenance or other reasons. At on-site testing of a design currently used in related art, a wheeled anchor, as described above, was detached several times by a person, standing on the roof, pulling the tether upwards at an angle similar to a 14:12 slope in the direction of a force that would be caused by a fall from a person attached to the system on the opposite side of the roof. Understandably, eliminating this risk is critically important for the practical use of the roof anchor, as a fall from the roof may cause at a minimum serious injuries.

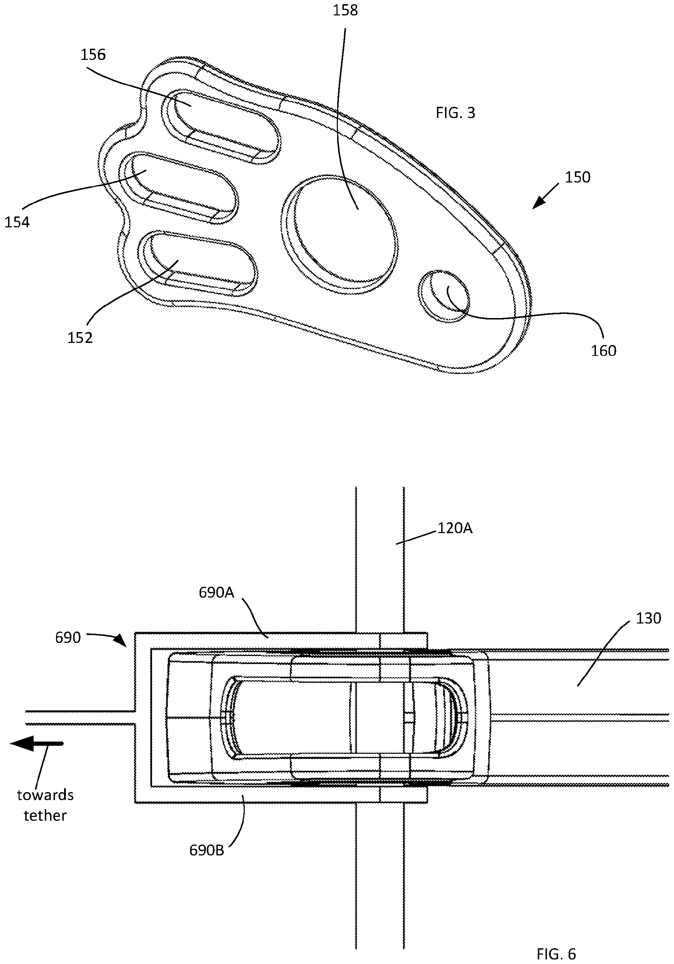

In a related implementation of the connector configured to be pivotally attached to the axle of the device 100 - such as that of the connector 690 schematically illustrated in FIG. 6 in cooperation with the axle 120A- the connector 690 is judiciously configured to be a bracket with two arms 690A, 690B. Such bracket is dimensioned to embrace and go around the end of the anchoring device body 130, (shown attached to the axle 120A) to be movably affixed to the axle 120A in two places, through two respective openings in the arms 690A, 690B. The specific shape and features of the embodiment of the connector (intermediate link) 690 may differ - for example, the connector can include more than two openings for attachment to an axle (as would be, for example, in the case when the connector is configured to have an "M" shape for attachment to the axle at three locations).

As shown in the example of FIG. 3, the connector 150 may include a plurality of openings that facilitate attachment to other auxiliary connectors, tethers, and devices that may be used in conjunction therewith.

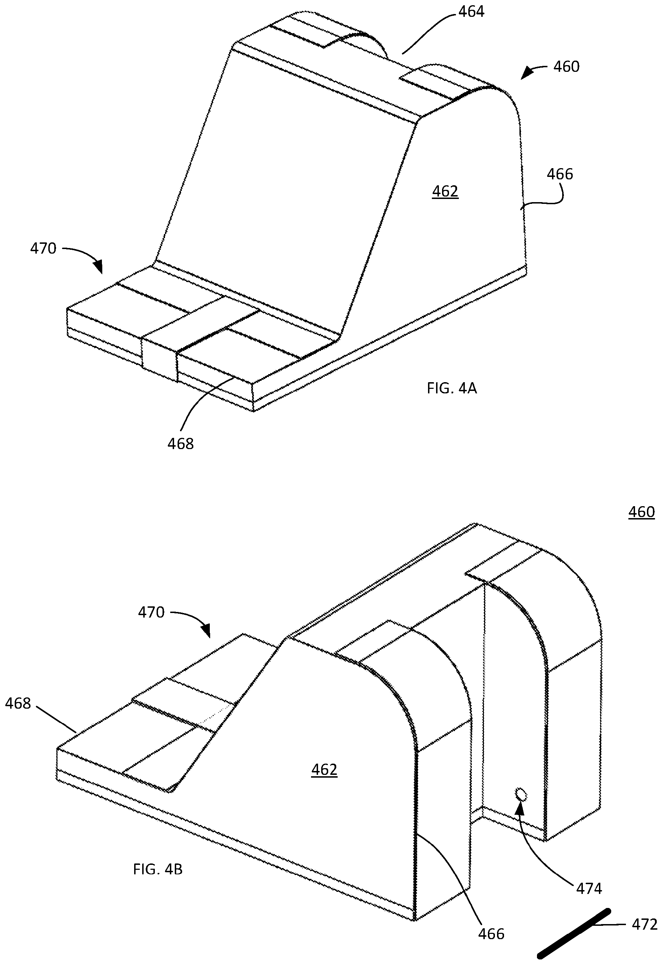

Additional embodiments of the improved roof-anchoring system may include a stopper 460, as shown in FIG. 4, to keep a wheeled roof anchoring system 100 in place on the roof during the deployment or installation thereof. As shown in FIGs. 4A and 4B, the stopper 460 may feature a generally trapezoidal or wedge-shaped portion, 462, to wedge between the wheels of the anchoring device and the surface of the roof to prevent the mobile device from descending or rolling down the roof, in operation thereof. The stopper 460 further may feature a notch or trench 464 on a first end 466 of the stopper, and a planar or other appropriately shaped protrusion 470 at a second end 468 of the stopper, upon which the wheels of the wheeled anchor 100 may sit. In addition, a rod 472 may be used for insertion into the opening(s) 474 of the stopper, or otherwise be attached to the stopper with, for example, a clamp, and used as a handle or connection point for a tether, carabiner, snap hook or another appropriate device and/or to add counterweight (e.g., if a steel rod is used) with the use of which the stopper will be removed to free the wheels of the anchoring device. This allows a user to safely remove the stop (e.g., the user can remove the stopper while standing on the ground, next to the building).

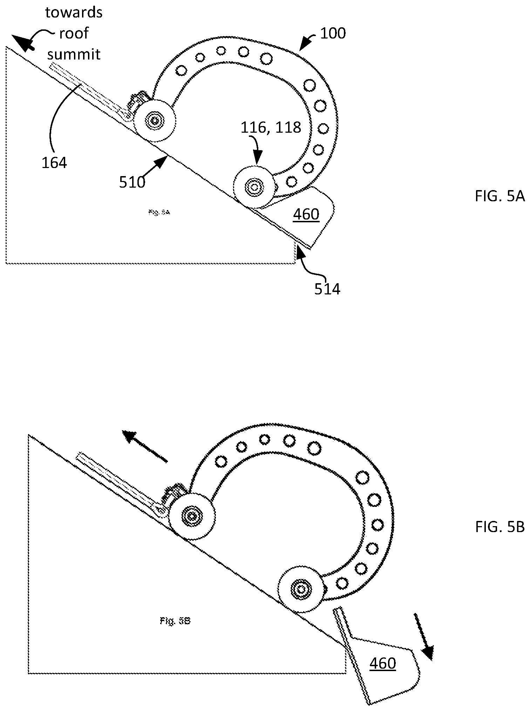

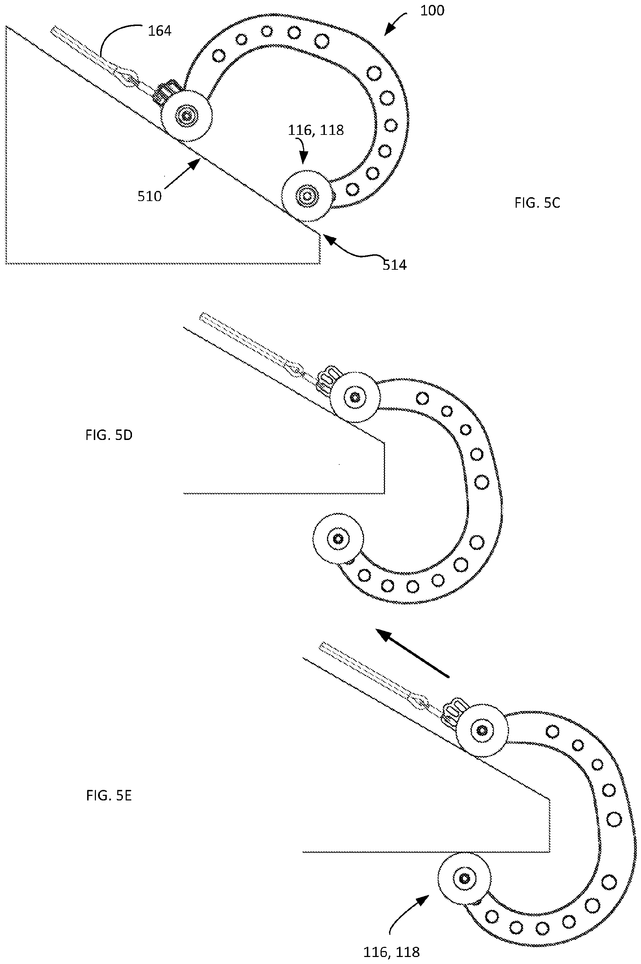

FIGS. 5A and 5B depict the use of an embodiment 460 of the stopper with an anchor 100. As shown in FIG. 5A, when the anchor or anchoring member 100 is lowered away from the summit of the roof along the slope of the roof 510 towards the edge 514, the stopper 460 is used (substantially, as a wedge element) to optionally temporarily stop the anchor 100 in a desired location before the lower wheels 116, 118 of the anchor 100 reach the edge 114. FIG. 5B illustrates the moment of "release" of the anchor 100 by, for example, pulling the tether 164 towards the summit of the roof to separate the wheels 116, 118 from contact with the stopper (and - when the stopper 460 is substantially at the edge 514 of the roof let the stopper 460 fall from the roof). Following the release of the stopper 460 from the anchor 100 (FIG. 5C), the anchor 100 can be further lowered along the surface 510 towards the edge / eave / other structure of the roof until the lower wheels 116, 118 assume the position below the edge or eave (FIG. 5D), to position the anchoring member 100 firmly pressed to the eave/edge and under the eave / edge, as discussed in more detail below. (While the tether is shown in FIGs. 5A, 5B to be attached to the upper through-hole of the connector 150, it is understood that in some implementations it is preferred to have it attached to the lower through-hole, as is schematically shown in FIG. 5C.)

In further reference to FIGs. 1 and 2, in one implementation of the use of the anchoring device 100, after a user (not pictured) ensures that the anchoring device 100 is securely affixed to the tether line 164 (via, for example, the connector 150), the anchoring device 100 is placed on the slope of the roof to have all sets of its wheels in contact with the rooftop (FIG. 5C) and further lowered down a roof slope in a direction away from a roof ridge or peak or summit (not pictured) towards the roof edge. As the wheeled anchoring member 100 reaches the roof edge, the leading wheels 116 and 118 (located at a lower level on the roof as compared to the wheels 112, 114) drop below the roof edge (FIG. 5D). The anchoring device is then slightly raised by its tether so that the leading wheels of the anchoring device 100 that are below the roof edge are raised up and engage the soffit or under-roof surface (FIG. 5E) with the wheels 116, 118. In other words, the anchoring device 100 is further tensioned (strained) against and in contact with the roof edge as a result of pulling the anchoring device towards the roof summit so as to draw the device tightly into place, while the trailing wheels 112, 114 (at the tethered axle 120A) remain on the roof surface above the lower wheels 116, 118 now affixed in a tensioned position under the roof edge.

When used with the "stopper", a procedure of installation of the anchoring device may involve the steps of positioning a wheeled anchoring device 100 on the roof near the roof edge, with the leading wheels 116 and 118 resting upon or otherwise engaging the stopper. When the user is ready to install the device 100, wheels 116 and 118 are released or disengaged from the stopper 460, to preferably cause the stopper to fall. (A small auxiliary tether may be attached to the rod at the back of the stopper and also attached to the side of a ladder to catch the stopper, causing it to not fall to the ground.) Then, the leading wheels 116 and 118 of the device 100 may be lowered by the tether 164 and dropped below the roof edge such that the leading wheels of the anchoring device 100 hang below the roof edge to engage a soffit or under-roof surface (not pictured) with the wheels 116, 118 and further secured in the so-engaged position by pulling the tether 164 up the roof and securing the tether in a position in which the wheels 116, 118 are in tensioned contact with a surface under the edge of the roof.

FIGs. 7A, 7B, 7C illustrate schematically an example of an anchoring device and a single tether that is attached to the body of the anchoring device, rather than the axle via the pivotal connector 150 of an embodiment of the invention. (While the tether line is illustrated to be attached at its end to the body of the anchoring device, generally it shall be attached to the corresponding pivotal connector.) A moderate to large force, suddenly applied to the anchoring device through the attached tether or a connector and a tether - as might be expected when a user of the anchoring device (attached to eave of the roof on the side of the house opposite to a part of the roof where the user is standing) stumbles or falls, creates a non-zero torque due to the non-zero spatial separation between the point of attachment of the tether and the axle of the anchoring device. This non-zero torque may separate/detach the anchoring device (on the left side of FIGs. 7A, 7B, 7C). The attachment of the tether to the pivotable connector and through it - to the axle of the anchoring device, according to the idea of the invention, avoids such possibility. With regard to FIG. 7A, on a 12:12 slope with 12,7 cm (5") soffits the reader is reminded to please note the gap below the soffit on the left side.

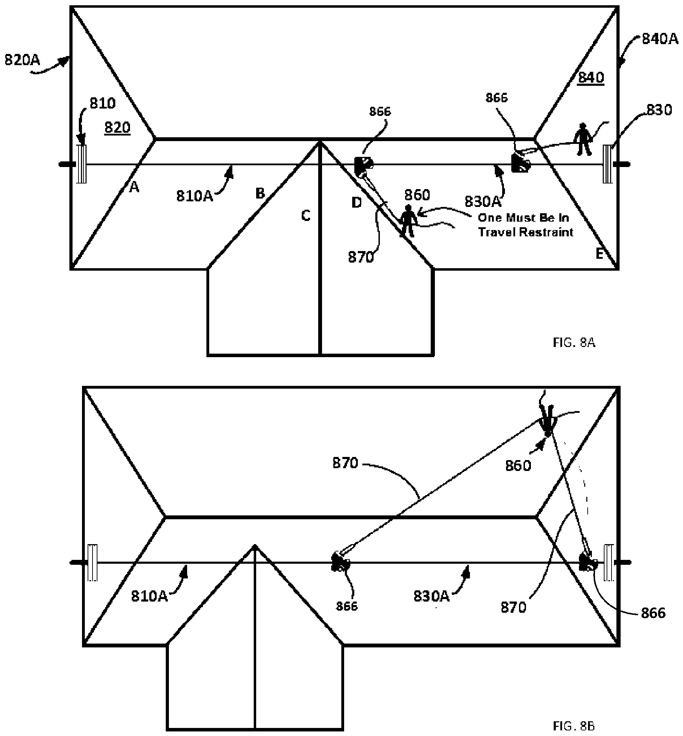

In practice, the method of forming and maintaining a secure attachment to a roof of the building includes the simultaneous use of a combination of multiple anchoring devices used simultaneously (at least two, possibly three or more - each may be structured according to the embodiment 100 or configured to substantially resemble it). This situation is schematically illustrated in FIG. 8A, showing (from the top) the first anchoring device 810 already secured with one axle and set of wheels under the edge 820A of the roof slope 820 and the second anchoring device 830 already secured with one axle of that system under another edge 840A of another, opposite roof slope 840. The single individual tether, labeled as 810A on one side and 830A on the other side, attached to the respectively-corresponding devices 810, 830 via corresponding connectors pivotally affixed to the front (upper) axles of the devices 810, 830 - is stretched along the respectively-corresponding slopes 820, 840 and tensioned (with the use of a progress capture pulley, ratchet, or other tightening device) at the device 810 and/or the device 830. (Alternatively, 810A and 830A may be two separate tethers that are attached to the respectively-corresponding anchoring devices 810, 830 via corresponding connectors pivotally affixed to the front/upper axles of the devices 810, 830 - are stretched along the respectively-corresponding slopes 820, 840 and then attached to one another with the use of a ratchet, for example to form a common tether line extending from the device 810 to the device 830.) This tether line is formed under tension sufficient to maintain each of the devices 810, 830 in their respective positions without having the devices substantially moving away from the respective edges with respect to the edges 820A, 840A even if a sufficient force were to be applied to at least one of the devices 810, 830. (As shown, the single tether line 810A, 830A or common tether line formed by individual tethers 810A, 830A is passed over the multiple rooftop edges - shown in this example as A, B, C, D, E - while not being attached to any other roof fixture). The so-attached / interconnected and stretched about the roof combination of the first and second anchors 810, 830 is configured, therefore, to allow the user 860 to movably affix himself, with the use of appropriate gear and harness - such as that including a rope grab, carabiner, snap hook, ring or other similar device - to the common tether line 810A, 830A to be able to slidably reposition such rope grab, carabiner, snap hook, ring, or other similar device over and along the single or common tether line 810A, 830A from substantially every point of the single or common tether line to every other point of the common tether line and, therefore, to move about the roof while being secured from the fall by the systems 810, 830 interconnected to one another by the strained single or common tether line 810A, 830A.

As illustrated in the specific example FIG. 8A, for example, the lifeline 870 passing through and/or attached to the belt or harness of the user 860 is slidably attached via some combination of a lanyard, lifeline, strap or other type of line and a slidable device/s such as a rope grab, carabiner, snap hook, ring or other similar device 866 to the common tether 810A, 830A at the lifeline to the tether or the harness to the lifeline. Alternatively, in a related embodiment, the attachments 866 may be sufficiently fixed.

A person of skill will readily appreciate that formation of the common tether line as discussed results in a situation where the used anchoring device 830 is prevented from moving away from the corresponding edges of the roof by the tensioned contact of the anchoring device 810 with the edge 820A of the roof, while the anchoring device 810 is prevented from moving away from the edge 820A of the roof by the tensioned contact of the anchoring device 830 with the edge 840A of the roof. Furthermore, the user 860 is enabled to move about the roof while connected to the tether line or common tether line via the device 866. Notably, with only one lifeline attached to one tether, if a user moves too close to a corner such person is at risk of falling because he/she can only be completely prevented from falling off of 1 of the 2 edges that are on either side of the corner. However, if a person anchors one lifeline to the tether, at or near the anchoring device that is closest to the corner, and anchors a second lifeline to the same tether line or common tether line at a distance away from the anchorage of the first lifeline, the person can be protected from falling from the roof edges on both sides of the corner so they can get much closer to the corner with fall protection. FIG. 8B schematically illustrates a secure attachment to the roof similar to that of FIG. 8A, but in which a person is using two lifelines instead of one, to better prevent a fall while working near a corner.

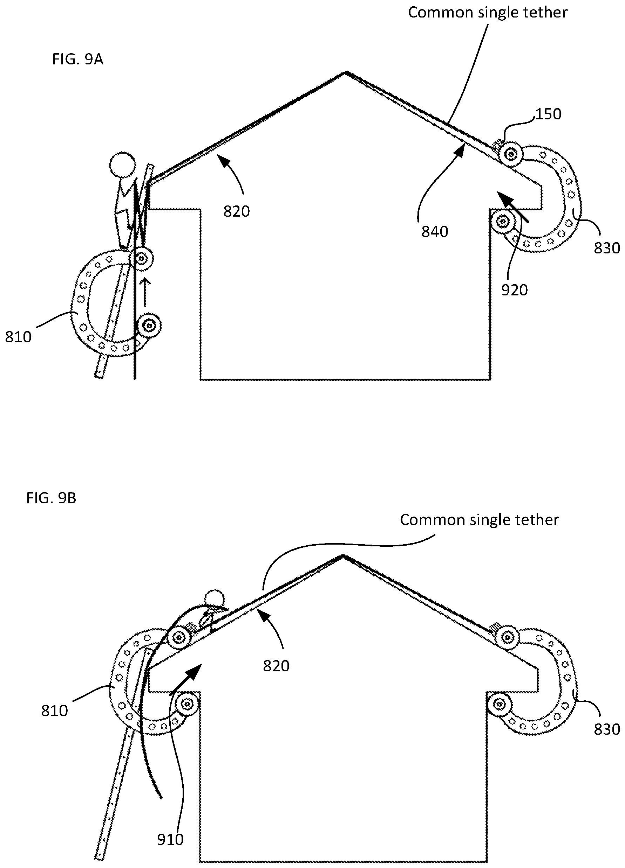

As an additional illustration, the schematic version of the combination of the already connected to one another systems 810, 830 is shown in FIGs. 9A, 9B where the arrows 910, 920 illustrate the tension force(s) with which the lower set of wheels with corresponding axles of the systems 810, 830 are substantially unmovably pressed to the under-surface of the roof below the corresponding edges 820A, 840A, with the tether tensioned and attached to the anchoring devices.

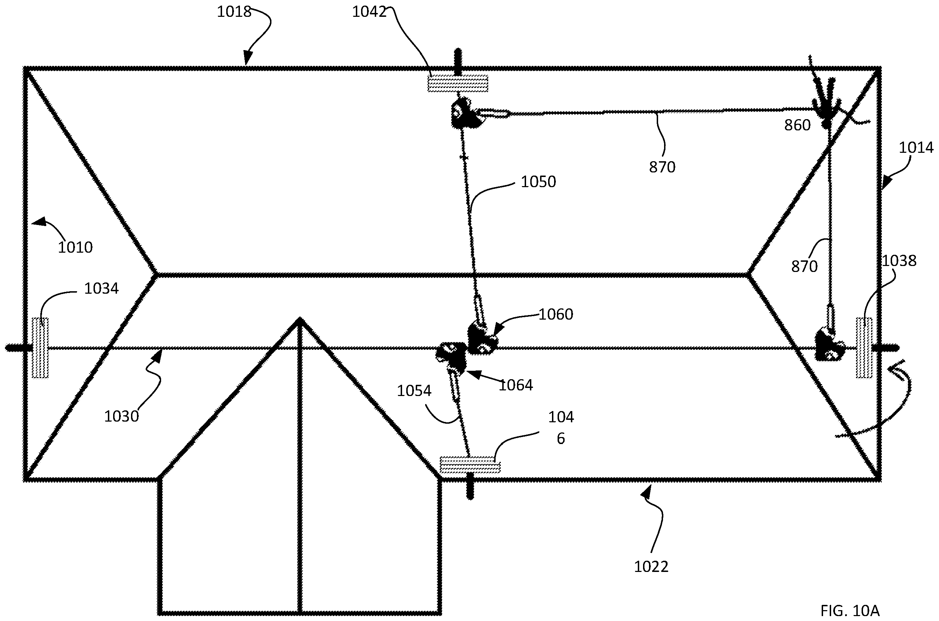

Notably, certain further improvements to the methodology for forming and maintaining a secure attachment to the roof are envisioned and remain within the scope of the invention. Among them - in reference to FIG. 10A, for example, showing schematically a top view of the roof with edges 1010, 1014, 1018, 1022 - there is the use of a system in which, in addition to the tether line 1030 tensionably connecting the opposing anchoring devices 1034, 1038 that are substantially immovably affixed to and under the edges 1010, 1014 (as discussed above), at least one additional anchoring device is used (as shown - two devices, 1042 and 1046) that, with the use of its respective tether or support line (or lifeline; here - 1050, 1054) is also affixed under tension to the roof edge (1018, 1022) and substantially permanently to the major tether line 1030 at a point between the ends of the tether line (here - points 1060, 1064) such that the corresponding support line and the main, common tether line are transverse to one another. In a specific example, the attachment between a given support line and a tether line 1030 can be structured with the use of a component referred to in the art as a "Goblin". When two or more so-structured connecting lines (1050, 1054) are present, the connecting points 1060, 1064 can be chosen far apart from one another (substantially anywhere between the ends of the tether 1030 corresponding to the anchors 1034, 1038) or close to one another (as shown). (As shown, with two tensioned tethers from the tether line 1030 to the anchor device 1042, and the tether line 1030 to the anchor device 1046, the tether line 1050 is much stronger and the person 860 is better protected than if the tether line 1030 to 1046 was not included.)

This additional arrangement of the combination of the main tether line with at least one support line facilitates an additional degree of freedom as far as attachment of the user at the rooftop is concerned. Specifically, the user 860 located on the roof somewhere in the area limited by the edges 1014, 1018 and the support line 1050 and the tether line 1030 is now in a position to use a predefined connecting element to moveably affix the harness the user is wearing to both the support line and the tether line - thereby gaining the ability to move anywhere in the identified area and approach the corner of the roof at the intersection of edges 1014, 1018 without the risk of falling off the roof. Alternatively or in addition, at least one of the mechanical connections between the user's harness and the lines 1030, 1050 (in this example) can be an anchored - that is, substantially immovable - connection.

Added tethers from auxiliary anchoring devices may be used to increase the safe area on the roof for the user and reinforce the existing tensioned tether line/s. (For example, to reinforce a tensioned line, a person with a 200-foot tensioned tether line, halfway between the two anchoring devices may attach a second tensioned tether to the original tether, such second tether line is attached preferably substantially perpendicularly to the original tensioned tether line and attaches to an anchorage at the roof edge, where the roof edge is nearly parallel to the original tether. This tether reinforces the original tether for a person that is attached to the original tether and is on the roof on the opposite side of the roof from the second auxiliary tether. To reinforce the original tensioned tether on both sides of the roof, a tensioned tether shall be attached to both sides of the original tether.

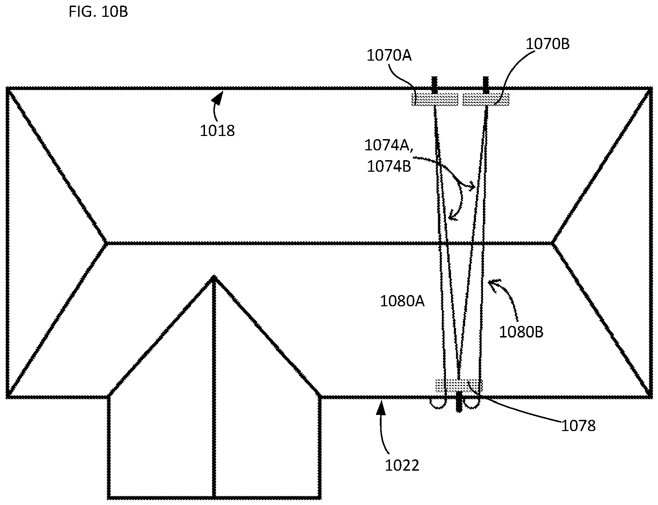

Yet another related non-limiting implementation is schematically shown in FIG. 10B, in which two anchoring devices 1070A, 1070B juxtaposed in cooperation with the same roof edge 1018 are tensioned (via two tethers 1074A, 1074B) against the anchoring device 1078 juxtaposed in cooperation with the opposite roof edge 1022. 1080A, 1080B illustrate back-up safety ropes and/or ropes for ascending / descending along the roof.

Accordingly, an embodiment of the method for installation of a roof anchor on a roof of a building may include attaching a tether to the front of a first anchoring device and running the tether across the roof, possibly with the assistance of a line thrower and throw line, lifting the anchor device, possibly with a ladder and positioning a first wheeled roof-anchoring device near a first edge of the roof such that a first set of wheels with a corresponding first set of wheels with corresponding axle are located under and in a first tensioned contact with the first edge while a second set of wheels with a corresponding second axle are in contact with and on the roof and a first connector pivotally attached to the second axle is under tension due to a first force pulling the first connector away from the second axle up the roof, possibly from a person on the opposite side of the roof that is pulling the tether line that is coming from the anchor device. (Here, the first roof-anchoring device includes a first arched body having first and second ends, the first axle with the first set of wheels juxtaposed with the first arched body at the first end, the second axle with the second set of wheels juxtaposed with the first arched body at the second end, and the first connector.) The method additionally includes disposing a second wheeled roof-anchoring device near a second edge of the roof, generally on the opposite side of the roof from the first edge, such that a third set of wheels with a corresponding third axle are located under and in a second tensioned contact with the second edge while a fourth set of wheels with a corresponding fourth axle are in contact with and on the roof and a second connector pivotally attached to the fourth axle is under tension due to a second force pulling the second connector away from the fourth axle, up the roof. This may be done by suspending the second anchor device below the second roof edge, slightly above the ground, from the tensioned tether that is coming from the first anchor device using a progress capture pulley or similar, and then lifting the anchor device with the rope and progress capture pulley or similar device, maintaining tension on the tether to the first anchor device on the other side, and then disposing the second anchoring device on the edge of the second roof edge and tensioning the tether line. See the schematic illustrations of FIGs. 9A, 9B. (Here such second roof-anchoring device includes a second arched body having third and fourth ends, the third axle with the third set of wheels juxtaposed with the second arched body at the third end, the fourth axle with the fourth set of wheels juxtaposed with the second arched body at the fourth end, and the second connector). The first and second connectors are interconnected under constant tension with a common tether line to maintain the first and second tensioned contacts while preventing the first and third sets of wheels from losing contact with respective first and second edges of the roof.

It should be evident that the improved roof-anchoring device 100, the overall anchoring system (such as that described in reference to FIG. 8A, 8B or FIGs. 9A, 9B, for example) and any components disclosed herein may be fabricated or formed in a variety of ways and from a variety of materials. The various parts may be machined, molded or otherwise fabricated from high strength materials such as steel, aluminum alloy, reinforced aluminum, tubular alloy, highstrength plastics or wood, or be manufactured from a combination of any suitable materials and processes. The choice of materials and construction are clearly within the scope of the appended claims. A skilled artisan will readily appreciate that embodiments of the invention - as illustrated, for example, in connection with FIG. 8A - provide a clear advantage in exploitation of the embodiment. Specifically, neither the safety feature described in connection with FIG. 8A nor the situation when the hook or ring 866 is repositionable substantially from every point on the common tether line to every other point of the common tether line, understandably, is not possible when a link connecting the devices 810, 830 to one another includes an element that is in contact with the roof under pressure vector directed towards the roof to provide a firm hold at the roof: in this latter case, such element acts to additionally restrict or prevent the movement of a given slidable device 866 with respect to the corresponding edge.)

References made throughout this specification to "one embodiment," "an embodiment," "a related embodiment," or similar language mean that a particular feature, structure, or characteristic described in connection with the referred to "embodiment" is included in at least one embodiment of the present invention. Thus, appearances of these phrases and terms may, but do not necessarily, refer to the same implementation. It is to be understood that no portion of disclosure, taken on its own and in possible connection with a figure, is intended to provide a complete description of all features of the invention.

It is also to be understood that no single drawing is intended to support a complete description of all features of the invention. In other words, a given drawing is generally descriptive of only some, and generally not all, features of the invention. A given drawing and an associated portion of the disclosure containing a description referencing such drawing do not, generally, contain all elements of a particular view or all features that can be presented is this view, for purposes of simplifying the given drawing and discussion, and to direct the discussion to particular elements that are featured in this drawing. Although a particular detail of an embodiment of the invention may not be necessarily shown in each and every drawing describing such embodiment, the presence of this detail in the drawing may be implied unless the context of the description requires otherwise. In other instances, well known structures, details, materials, or operations may be not shown in a given drawing or described in detail to avoid obscuring aspects of an embodiment of the invention that are being discussed.

The invention as recited in claims appended to this disclosure is intended to be assessed in light of the disclosure as a whole, including features disclosed in prior art to which reference is made.

While the description of the invention is presented through the above examples of embodiments, those of ordinary skill in the art understand that modifications to, and variations of, the illustrated embodiments may be made without departing from the inventive concepts disclosed herein. The invention should not be viewed as being limited to the disclosed examples.

## Claims

1. A method for forming a secure attachment to a roof (510) of a building, the method comprising:
positioning a first roof-anchoring device (100) at or near a first edge (514) of the roof (510) such that a first axle (120) of the first roof-anchoring device (100) is located under and in a first tensioned contact with the first edge (514) while
a second axle (120) of the roof-anchoring device (100) is on the roof (510) and
a first connector (150) pivotally attached to the second axle (120) is under tension due to a first force pulling said first connector (150) away from the second axle (120) up the roof (510),
wherein said first roof-anchoring device (100) includes a first arched body (130) having first and second ends, the first axle (120) juxtaposed with the first arched body (130) at the first end, the second axle (120) juxtaposed with the first arched body (130) at the second end, and said first connector (150);
disposing a second roof-anchoring device (100) near a second edge (514) of the roof (510) such that a third axle (120) of the second roof-anchoring device (100) is located under and in a second tensioned contact with the second edge (514) while
a fourth axle (120) of the second roof-anchoring device (100) is in contact with and on the roof (510) and a second connector (150) pivotally attached to the fourth axle (120) is under tension due to a second force pulling said second connector (150) away from the fourth axle (120) up the roof (510),
wherein said second roof-anchoring device (100) includes a second arched body (130) having third and fourth ends, the third axle (120) juxtaposed with the second arched body (130) at the third end, the fourth axle (120) is juxtaposed with the second arched body (130) at the fourth end, and said second connector (150);
wherein said first and second connectors (150) are linked with a tether line (164) under strain configured to maintain the first and second tensioned contacts while preventing said first and third axles (120) from moving away from first and second edges (514) of the roof (510).

2. The method according to claim 1, wherein said disposing the second roof-anchoring device (100) includes disposing the second roof-anchoring device (100) near or at the second edge (514) that is opposite to the first edge (514).

3. The method according to claim 1, wherein at least one of said positioning and disposing includes at least one of the following:
a) locating a chosen roof-anchoring device (100), from the first and second roof-anchoring devices (100), on the roof (510) such that all wheels (112) of said chosen device (100) are in contact with a rooftop; and
causing said chosen device (100) to wheel (112) to a corresponding edge (514) of the roof (510), from the first and second edges (514) of the roof (510), at least until a set of wheels (112) of said chosen device (100) closest to said corresponding edge (514) loses contact with the roof (510);
b) repositioning said chosen device (100) along a wall of the building up towards the roof (510) until an axle (120) to which a corresponding connector (150), from the first and second connectors (150), is attached is positioned above said corresponding edge (514) of the roof (510) while
a set of wheels (112) on an axle (120) opposite to said corresponding connector (150) is pressed to and under an eave and in contact with an edge (514) of the roof (510); and
c) pivoting at least one of the first and second connectors (150) at two locations with respect to a corresponding axle (120).

4. The method according to claim 3, further comprising one of the following:
i) after said locating and causing, wheeling said chosen roof-anchoring device (100) along the roof (510) away from said corresponding edge (514) to pull said set of wheels (112) that have lost contact with the roof (510) under the roof (510) in a tensioned contact with said corresponding edge (514); and
ii) after said repositioning, wheeling said chosen device (100) such that an axle (120) at a side of the chosen device (100) with the corresponding connector (150) travels along the roof (510) away from said corresponding edge (514) to pull an axle (120) that is opposite to the corresponding connector (150) under the roof (510) in the tensioned contact with said corresponding edge (514).

5. The method according to claim 3, wherein said locating includes
placing a stopper (460) on the roof (510) between the corresponding edge (514) and the axle (120) closest to the corresponding edge (514); and
engaging wheels (112) on said axle (120) closest to the corresponding edge (514) with the stopper (460) to prevent further movement of the chosen device (100) towards the corresponding edge (514).

6. The method according to claim 5, further comprising disengaging at least one of the first and second wheeled devices (100) from a stopper (460) disposed below or under an axle (120) of such at least one of the first and second devices (100) to cause said stopper (460) to fall from a corresponding edge (514) of the roof (510).

7. The method according to claim 1, further comprising configuring said tether line (164) such that
the preventing said first set of wheels (112) from moving relative to the first edge (514) of the roof (510) is caused only by the tensioned contact of the third set of wheels (112) with the second edge (514) of the roof (510), and
the preventing said third set of wheels (112) from moving relative to the second edge (514) of the roof (510) is caused only by the tensioned contact of the first set of wheels (112) with the first edge (514) of the roof (510).

8. The method according to claim 1 further comprising disengaging at least one of the first and second wheeled devices (100) from a stopper (460) disposed below or under an axle (120) of such at least one of the first and second devices (100) to cause said stopper (460) to fall from a corresponding edge (514) of the roof (510).

9. The method according to claim 1, further comprising attaching a connecting element between a user's harness and said tether line (164) or an element of a user's lifeline (870) to said tether line (164) to permit at least one of sliding and anchoring of the respective element over and along the tether line (164) from every first point of the tether line (164) to every second point of the tether line (164), both the first point and the second point defined between the first and second connectors (150).

10. The method according to claim 1, comprising:
positioning a third roof-anchoring device (100) at or near a third edge (514) of the roof (510) such that a fifth axle (120) of the third roof-anchoring device (100) is located under and in a third tensioned contact with the third edge (514) while
a sixth axle (120) of the third roof-anchoring device (100) is in contact with and on the roof (510) and
a third connector (150) pivotally attached to the sixth axle (120) is under tension due to a third force pulling said third connector (150) away from the sixth axle (120) up the roof (510),
wherein a structure of said third roof-anchoring device (100) is substantially equivalent to a structure of the first roof-anchoring device (100), and
wherein the third force is caused as a result of tensioned attachment of an element of the third roof-anchoring device (100) to the tether line (164) at a support point between the first second roof-anchoring devices (100) with the use of a support line (1050), said support line (1050) being transverse to the tether line (164).

11. The method according to claim 10, further comprising
attaching a first connecting element between a user's harness and said tether line (164) or a first element of the user's harness to said tether line (164), and
attaching a second connecting element between the user's harness and said support line (1050) or a second element of the user's harness to said support line (1050) to permit at least one of
a) at least one of sliding of a respective element over and along the tether line (164) from every point of the tether line (164) to every other point of the tether line (164) between an end of the tether line (164) and a support point, and anchoring the respective element at the tether line (164) at any point between the end of the tether line (164) and the support point; and
b) at least one of sliding of the other respective element over and along the support line (1050) from every point of the support line (1050) to every other point of the support line (1050) between an end of the support line (1050) and the support point, and anchoring the other respective element at the support line (1050) at any point between the end of the support line (1050) and the support point.

12. The method according to claim 1, further comprising attaching a connecting element between a user's harness and a user's lifeline (870) lifeline or an element of a user's harness to said lifeline (870) to permit at least one of sliding and anchoring of the respective element over and along the tether line (164) from every first point of the tether line (164) to every second point of the tether line (164), both the first point and the second point defined between the first and second connectors (150).

13. The method according to claim 1, wherein said positioning the first roof-anchoring device (100) includes
placing the tether line (164) tensionally attached to the first roof-anchoring device (100) over the roof (510) to the second edge (514); and
comprising
attaching an end of the tether line (164) to the second roof-anchoring device (100) with a capture device while maintaining tension on the tether line (164) from the first edge (514) of the roof (510); and
lifting the second roof-anchoring device (100) to the second edge (514) while maintaining said tension.

## Patentansprüche

1. Verfahren zum Bilden einer sicheren Befestigung an einem Dach (510) eines Gebäudes, wobei das Verfahren Folgendes umfasst:
Positionieren einer ersten Dachverankerungsvorrichtung (100) an oder nahe einer ersten Kante (514) des Daches (510), sodass sich eine erste Achse (120) der ersten Dachverankerungsvorrichtung (100) unter und in einem ersten gespannten Kontakt mit der ersten Kante (514) befindet, während
eine zweite Achse (120) der Dachverankerungsvorrichtung (100) auf dem Dach (510) ist, und
ein erster Verbinder (150), der schwenkbar an der zweiten Achse (120) befestigt ist, aufgrund einer ersten Kraft, die den ersten Verbinder (150) weg von der zweiten Achse (120) das Dach (510) hinauf zieht, unter Spannung ist,
wobei die erste Dachverankerungsvorrichtung (100) einen ersten gewölbten Körper (130), der erste und zweite Enden aufweist, wobei die erste Achse (120) neben dem ersten gewölbten Körper (130) am ersten Ende positioniert ist, die zweite Achse (120) neben dem ersten gewölbten Körper (130) am zweiten Ende positioniert ist, und den ersten Verbinder (150) umfasst;
Anordnen einer zweiten Dachverankerungsvorrichtung (100) nahe einer zweiten Kante (514) des Daches (510), sodass sich eine dritte Achse (120) der zweiten Dachverankerungsvorrichtung (100) unter und in einem zweiten gespannten Kontakt mit der zweiten Kante (514) befindet, während
eine vierte Achse (120) der zweiten Dachverankerungsvorrichtung (100) in Kontakt mit und auf dem Dach (510) ist und ein zweiter Verbinder (150), der schwenkbar an der vierten Achse (120) befestigt ist, aufgrund einer zweiten Kraft, die den zweiten Verbinder (150) weg von der vierten Achse (120) das Dach (510) hinauf zieht, unter Spannung ist,
wobei die zweite Dachverankerungsvorrichtung (100) einen zweiten gewölbten Körper (130), der dritte und vierte Enden aufweist, wobei die dritte Achse (120) neben dem zweiten gewölbten Körper (130) am dritten Ende positioniert ist, die vierte Achse (120) neben dem zweiten gewölbten Körper (130) am vierten Ende positioniert ist, und den zweiten Verbinder (150) umfasst;
wobei die ersten und zweiten Verbinder (150) mit einer Anbindeleine (164) unter Spannung verbunden sind, dazu ausgelegt, den ersten und den zweiten gespannten Kontakt zu erhalten, dabei verhindernd, dass sich die erste und die dritte Achse (120) von der ersten und der zweiten Kante (514) des Daches (510) weg bewegen.

2. Verfahren nach Anspruch 1, wobei das Anordnen der zweiten Dachverankerungsvorrichtung (100) Anordnen der zweiten Dachverankerungsvorrichtung (100) nahe oder an der zweiten Kante (514), die der ersten Kante (514) gegenüberliegt, umfasst.

3. Verfahren nach Anspruch 1, wobei zumindest eines aus dem Positionieren und dem Anordnen zumindest eines aus Folgendem umfasst:
a) Positionieren einer gewählten Dachverankerungsvorrichtung (100), aus der ersten und der zweiten Dachverankerungsvorrichtung (100), auf dem Dach (510), sodass alle Räder (112) der gewählten Vorrichtung (100) in Kontakt mit einer Dachoberseite sind; und
Veranlassen der gewählten Vorrichtung (100), zu einer entsprechenden Kante (514) des Daches (510), aus der ersten und der zweiten Kante (514) des Daches (510), zu rollen (112), zumindest bis ein Satz Räder (112) der gewählten Vorrichtung (100), der der entsprechenden Kante (514) am nächsten ist, Kontakt mit dem Dach (510) verliert;
b) Neupositionieren der gewählten Vorrichtung (100) entlang einer Wand des Gebäudes nach oben in Richtung des Daches (510), bis eine Achse (120), an der ein entsprechender Verbinder (150), aus dem ersten und dem zweiten Verbinder (150), befestigt ist, über der entsprechenden Kante (514) des Daches (510) positioniert wird, während
ein Satz Räder (112) an einer Achse (120) gegenüber dem entsprechenden Verbinder (150) auf und unter eine Traufe und in Kontakt mit einer Kante (514) des Daches (510) gedrückt wird; und
c) Schwenken zumindest eines aus dem ersten und dem zweiten Verbinder (150) an zwei Orten bezüglich einer entsprechenden Achse (120).

4. Verfahren nach Anspruch 3, ferner eines aus Folgendem umfassend:
i) nach dem Positionieren und Veranlassen, Rollen der gewählten Dachverankerungsvorrichtung (100) entlang des Daches (510) weg von der entsprechenden Kante (514) zum Ziehen des Satzes von Rädern (112), die Kontakt mit dem Dach (510) verloren haben, unter das Dach (510) in einen gespannten Kontakt mit der entsprechenden Kante (514); und
ii) nach dem Neupositionieren, Rollen der gewählten Vorrichtung (100), sodass sich eine Achse (120) an einer Seite der gewählten Vorrichtung (100) mit dem entsprechenden Verbinder (150) entlang des Daches (510) weg von der entsprechenden Kante (514) bewegt, um eine Achse (120) zu ziehen, die dem entsprechenden Verbinder (150) unter dem Dach (510) im gespannten Kontakt mit der entsprechenden Kante (514) gegenüberliegt.

5. Verfahren nach Anspruch 3, wobei das Positionieren Folgendes umfasst:
Platzieren eines Anschlags (460) auf dem Dach (510) zwischen der entsprechenden Kante (514) und der Achse (120), die der entsprechenden Kante (514) am nächsten ist; und
Ineingriffbringen der Räder (112) an der Achse (120), die der entsprechenden Kante (514) am nächsten ist, mit dem Anschlag (460) zum Verhindern weiterer Bewegung der gewählten Vorrichtung (100) in Richtung der entsprechenden Kante (514).

6. Verfahren nach Anspruch 5, ferner umfassend Lösen zumindest einer aus den ersten und zweiten mit Rad versehenen Vorrichtungen (100) von einem Anschlag (460), angeordnet tiefer als oder unter einer Achse (120) einer solchen zumindest einen aus den ersten und zweiten Vorrichtungen (100), um den Anschlag (460) zu veranlassen, von einer entsprechenden Kante (514) des Daches (510) abzufallen.

7. Verfahren nach Anspruch 1, ferner umfassend Auslegen der Anbindeleine (164), sodass
das Hindern des ersten Satzes von Rädern (112) am Bewegen relativ zur ersten Kante (514) des Daches (510) nur durch den gespannten Kontakt des dritten Satzes von Rädern (112) mit der zweiten Kante (514) des Daches (510) veranlasst wird, und
das Hindern des dritten Satzes von Rädern (112) am Bewegen relativ zur zweiten Kante (514) des Daches (510) nur durch den gespannten Kontakt des ersten Satzes von Rädern (112) mit der ersten Kante (514) des Daches (510) veranlasst wird.

8. Verfahren nach Anspruch 1, ferner umfassend Lösen zumindest einer aus den ersten und zweiten mit Rad versehenen Vorrichtungen (100) von einem Anschlag (460), angeordnet tiefer als oder unter einer Achse (120) einer solchen zumindest einen aus den ersten und zweiten Vorrichtungen (100), um den Anschlag (460) zu veranlassen, von einer entsprechenden Kante (514) des Daches (510) abzufallen.

9. Verfahren nach Anspruch 1, ferner umfassend Befestigen eines Verbindungselements zwischen einem Geschirr eines Benutzers und der Anbindeleine (164) oder einem Element der Rettungsleine eines Benutzers (870) mit der Anbindeleine (164) zum Ermöglichen von zumindest einem aus Gleiten und Verankern des entsprechenden Elements über und entlang der Anbindeleine (164) von jedem ersten Punkt der Anbindeleine (164) zu jedem zweiten Punkt der Anbindeleine (164), wobei sowohl der erste Punkt als auch der zweite Punkt zwischen dem ersten und dem zweiten Verbinder (150) definiert sind.

10. Verfahren nach Anspruch 1, das Folgendes umfasst:
Positionieren einer dritten Dachverankerungsvorrichtung (100) an oder nahe einer dritten Kante (514) des Daches (510), sodass sich eine fünfte Achse (120) der dritten Dachverankerungsvorrichtung (100) unter und in einem dritten gespannten Kontakt mit der dritten Kante (514) befindet, während
eine sechste Achse (120) der dritten Dachverankerungsvorrichtung (100) in Kontakt mit und auf dem Dach (510) ist und
ein dritter Verbinder (150), der schwenkbar an der sechsten Achse (120) befestigt ist, aufgrund einer dritten Kraft, die den ersten Verbinder (150) weg von der sechsten Achse (120) das Dach (510) hinauf zieht, unter Spannung ist,
wobei eine Struktur der dritten Dachverankerungsvorrichtung (100) im Wesentlichen äquivalent einer Struktur der ersten Dachverankerungsvorrichtung (100) ist, und
wobei die dritte Kraft als ein Ergebnis einer gespannten Befestigung eines Elements der dritten Dachverankerungsvorrichtung (100) an der Anbindeleine (164) unter Verwendung einer Unterstützungsleine (1050) an einem Unterstützungspunkt zwischen der ersten und zweiten Dachverankerungsvorrichtung (100) verursacht wird, wobei die Unterstützungsleine (1050) quer zur Anbindeleine (164) ist.

11. Verfahren nach Anspruch 10, das ferner Folgendes umfasst:
Befestigen eines ersten Verbindungselements zwischen dem Geschirr eines Benutzers und der Anbindeleine (164) oder eines ersten Elements des Geschirrs des Benutzers an der Anbindeleine (164), und
Befestigen eines zweiten Verbindungselements zwischen dem Geschirr des Benutzers und der Unterstützungsleine (1050) oder eines zweiten Elements des Geschirrs des Benutzers an der Unterstützungsleine (1050) um zumindest eines aus Folgendem zu ermöglichen
a) zumindest eines aus Gleiten eines entsprechenden Elements über und entlang der Anbindeleine (164) von jedem Punkt der Anbindeleine (164) zu jedem anderen Punkt der Anbindeleine (164) zwischen einem Ende der Anbindeleine (164) und einem Unterstützungspunkt, und Verankern des entsprechenden Elements an der Anbindeleine (164) an einem beliebigen Punkt zwischen dem Ende der Anbindeleine (164) und dem Unterstützungspunkt; und
a) zumindest eines aus Gleiten des anderen entsprechenden Elements über und entlang der Unterstützungsleine (1050) von jedem Punkt der Unterstützungsleine (1050) zu jedem anderen Punkt der Unterstützungsleine (1050) zwischen einem Ende der Unterstützungsleine (1050) und dem Unterstützungspunkt, und Verankern des anderen entsprechenden Elements an der Unterstützungsleine (1050) an einem beliebigen Punkt zwischen dem Ende der Unterstützungsleine (1050) und dem Unterstützungspunkt.

12. Verfahren nach Anspruch 1, ferner umfassend Befestigen eines Verbindungselements zwischen einem Geschirr eines Benutzers und einer Sicherheitsleine (870) eines Benutzers oder einem Element des Geschirrs eines Benutzers mit der Rettungsleine (870) zum Ermöglichen von zumindest einem aus Gleiten und Verankern des entsprechenden Elements über und entlang der Anbindeleine (164) von jedem ersten Punkt der Anbindeleine (164) zu jedem zweiten Punkt der Anbindeleine (164), wobei sowohl der erste Punkt als auch der zweite Punkt zwischen dem ersten und dem zweiten Verbinder (150) definiert sind.

13. Verfahren nach Anspruch 1, wobei das Positionieren der ersten Dachverankerungsvorrichtung (100) Folgendes umfasst:
Platzieren der Anbindeleine (164), unter Spannung befestigt an der ersten Dachverankerungsvorrichtung (100) über dem Dach (510) an der zweiten Kante (514); und Folgendes umfassend:
Befestigen eines Endes der Anbindeleine (164) an der zweiten Dachverankerungsvorrichtung (100) mit einer Ergreifungsvorrichtung, dabei die Spannung an der Anbindeleine (164) von der ersten Kante (514) des Daches (510) aufrechterhaltend; und
Anheben der zweiten Dachverankerungsvorrichtung (100) zur zweiten Kante (514), dabei die Spannung aufrechterhaltend.

## Revendications

1. Procédé destiné à former une fixation sûre à un toit (510) d'un bâtiment, le procédé comprenant les étapes consistant à :
positionner un premier dispositif d'ancrage de toit (100) au niveau ou à proximité d'un premier bord (514) du toit (510) de sorte qu'un premier axe (120) du premier dispositif d'ancrage de toit (100) soit situé sous et dans un premier contact tendu avec le premier bord (514) tandis que
un deuxième axe (120) du dispositif d'ancrage de toit (100) se trouve sur le toit (510) et
un premier raccord (150) fixé de manière pivotante au deuxième axe (120) est sous tension en raison d'une première force qui éloigne ledit premier raccord (150) du deuxième axe (120) vers le haut du toit (510),
ledit premier dispositif d'ancrage de toit (100) comprenant un premier corps arqué (130) ayant des première et deuxième extrémités, le premier axe (120) étant juxtaposé au premier corps arqué (130) au niveau de la première extrémité, le deuxième axe (120) étant juxtaposé au premier corps arqué (130) au niveau de la deuxième extrémité, et ledit premier raccord (150) ;
disposer un deuxième dispositif d'ancrage de toit (100) près d'un deuxième bord (514) du toit (510) de sorte qu'un troisième axe (120) du deuxième dispositif d'ancrage de toit (100) soit situé sous et dans un deuxième contact tendu avec le deuxième bord (514) tandis que
un quatrième axe (120) du deuxième dispositif d'ancrage de toit (100) est en contact avec et sur le toit (510) et un deuxième raccord (150) fixé de manière pivotante au quatrième axe (120) est sous tension en raison d'une deuxième force qui éloigne ledit deuxième raccord (150) du quatrième axe (120) vers le haut du toit (510),
ledit deuxième dispositif d'ancrage de toit (100) comprenant un deuxième corps arqué (130) ayant des troisième et quatrième extrémités, le troisième axe (120) étant juxtaposé au deuxième corps arqué (130) au niveau de la troisième extrémité, le quatrième axe (120) étant juxtaposé au deuxième corps arqué (130) au niveau de la quatrième extrémité, et ledit deuxième raccord (150) ;
lesdits premier et deuxième raccords (150) étant reliés à une ligne d'amarre (164) sous tension conçue pour maintenir les premier et deuxième contacts tendus tout en empêchant lesdits premier et troisième axes (120) de s'éloigner des premier et deuxième bords (514) du toit (510) .

2. Procédé selon la revendication 1, ladite disposition du deuxième dispositif d'ancrage de toit (100) comprenant l'étape consistant à disposer le deuxième dispositif d'ancrage de toit (100) à proximité ou au niveau du deuxième bord (514) qui est opposé au premier bord (514).

3. Procédé selon la revendication 1, au moins l'un desdits positionnement et disposition comprenant au moins l'une des étapes suivantes consistant à :
a) localiser un dispositif d'ancrage de toit (100) choisi, parmi les premier et deuxième dispositifs d'ancrage de toit (100), sur le toit (510) de sorte que toutes les roues (112) dudit dispositif (100) choisi soient en contact avec un toit ; et
entraîner ledit dispositif (100) choisi à rouler (112) vers un bord (514) correspondant du toit (510), à partir des premier et deuxième bords (514) du toit (510), au moins jusqu'à ce qu'un ensemble de roues (112) dudit dispositif (100) choisi le plus proche dudit bord (514) correspondant perde le contact avec le toit (510) ;
b) repositionner ledit dispositif (100) choisi le long d'un mur du bâtiment jusqu'au toit (510) jusqu'à ce qu'un axe (120) auquel un raccord (150) correspondant, parmi les premier et deuxième raccords (150), est attaché, soit positionné au-dessus dudit bord (514) correspondant du toit (510) tandis que
un ensemble de roues (112) sur un axe (120) opposé audit raccord (150) correspondant est pressé sur et sous un avant-toit et en contact avec un bord (514) du toit (510) ; et
c) pivoter au moins un des premier et deuxième raccords (150) à deux endroits par rapport à un axe (120) correspondant.

4. Procédé selon la revendication 3, comprenant en outre l'une des étapes suivantes consistant à :
i) après lesdits localisation et entraînement, faire rouler ledit dispositif d'ancrage de toit (100) choisi le long du toit (510) à l'opposé dudit bord (514) correspondant pour tirer ledit ensemble de roues (112) qui ont perdu le contact avec le toit (510) sous le toit (510) dans un contact tendu avec ledit bord (514) correspondant ; et
ii) après ledit repositionnement, faire rouler ledit dispositif (100) choisi de sorte qu'un axe (120) sur un côté du dispositif (100) choisi avec le raccord (150) correspondant se déplace le long du toit (510) à l'opposé dudit bord (514) correspondant pour tirer un axe (120) qui est opposé au raccord (150) correspondant sous le toit (510) dans le contact tendu avec ledit bord (514) correspondant.

5. Procédé selon la revendication 3, ladite localisation comprenant les étapes consistant à
placer une butée (460) sur le toit (510) entre le bord (514) correspondant et l'axe (120) le plus proche du bord (514) correspondant ; et
mettre en prise les roues (112) sur ledit axe (120) le plus proche du bord (514) correspondant avec la butée (460) pour empêcher tout mouvement supplémentaire du dispositif (100) choisi vers le bord (514) correspondant.

6. Procédé selon la revendication 5, comprenant en outre l'étape consistant à séparer au moins l'un des premier et deuxième dispositifs à roues (100) d'une butée (460) disposée en dessous ou sous un axe (120) dudit au moins un des premier et deuxième dispositifs (100) pour amener ladite butée (460) à tomber d'un bord (514) correspondant du toit (510).

7. Procédé selon la revendication 1, comprenant en outre l'étape consistant à configurer ladite ligne d'amarre (164) de sorte que
empêcher ledit premier ensemble de roues (112) de se déplacer par rapport au premier bord (514) du toit (510) n'est causé que par le contact tendu du troisième ensemble de roues (112) avec le deuxième bord (514) du toit (510), et
empêcher ledit troisième ensemble de roues (112) de se déplacer par rapport au deuxième bord (514) du toit (510) n'est causé que par le contact tendu du premier ensemble de roues (112) avec le premier bord (514) du toit (510).

8. Procédé selon la revendication 1, comprenant en outre l'étape consistant à séparer au moins l'un des premier et deuxième dispositifs à roues (100) d'une butée (460) disposée en dessous ou sous un axe (120) dudit au moins un des premier et deuxième dispositifs (100) pour amener ladite butée (460) à tomber d'un bord (514) correspondant du toit (510).

9. Procédé selon la revendication 1, comprenant en outre l'étape consistant à fixer un élément de raccord entre le harnais de l'utilisateur et ladite ligne d'amarre (164) ou un élément de la ligne de vie de l'utilisateur (870) à ladite ligne d'amarre (164) pour permettre au moins l'un parmi un glissement et un ancrage de l'élément respectif sur et le long de la ligne d'amarre (164) de chaque premier point de la ligne d'amarre (164) à chaque second point de la ligne d'amarre (164), le premier point et le second point étant définis entre les premier et deuxième raccords (150).

10. Procédé selon la revendication 1, comprenant les étapes consistant à :
positionner un troisième dispositif d'ancrage de toit (100) au niveau ou à proximité d'un troisième bord (514) du toit (510) de sorte qu'un cinquième axe (120) du troisième dispositif d'ancrage de toit (100) soit situé sous et dans un troisième contact tendu avec le troisième bord (514) tandis que
un sixième axe (120) du troisième dispositif d'ancrage de toit (100) est en contact avec et sur le toit (510) et
un troisième raccord (150) fixé de manière pivotante au sixième axe (120) est sous tension en raison d'une troisième force qui éloigne ledit troisième raccord (150) du sixième axe (120) vers le haut du toit (510),
une structure dudit troisième dispositif d'ancrage de toit (100) étant sensiblement équivalente à une structure du premier dispositif d'ancrage de toit (100), et
la troisième force étant provoquée par la fixation sous tension d'un élément du troisième dispositif d'ancrage de toit (100) à la ligne d'amarre (164) à un point d'appui entre les premier et deuxième dispositifs d'ancrage de toit (100) à l'aide d'une ligne d'appui (1050), ladite ligne d'appui (1050) étant transversale par rapport à la ligne d'amarre (164).

11. Procédé selon la revendication 10, comprenant en outre les étapes consistant à
fixer un premier élément de raccord entre le harnais de l'utilisateur et ladite ligne d'amarre (164) ou un premier élément du harnais de l'utilisateur à ladite ligne d'amarre (164), et
fixer un second élément de raccord entre le harnais de l'utilisateur et ladite ligne d'appui (1050) ou un second élément du harnais de l'utilisateur à ladite ligne d'appui (1050) pour permettre au moins l'un parmi
a) au moins l'un parmi un glissement d'un élément respectif sur et le long de la ligne d'amarre (164) de chaque point de la ligne d'amarre (164) à chaque autre point de la ligne d'amarre (164) entre une extrémité de la ligne d'amarre (164) et un point d'appui, et un ancrage de l'élément respectif à la ligne d'amarre (164) en tout point entre l'extrémité de la ligne d'amarre (164) et le point d'appui ; et
b) au moins l'un parmi un glissement de l'autre élément respectif sur et le long de la ligne d'appui (1050) de chaque point de la ligne d'appui (1050) à chaque autre point de la ligne d'appui (1050) entre une extrémité de la ligne d'appui (1050) et le point d'appui, et un ancrage de l'autre élément respectif à la ligne d'appui (1050) en tout point entre l'extrémité de la ligne d'appui (1050) et le point d'appui.

12. Procédé selon la revendication 1, comprenant en outre l'étape consistant à fixer un élément de raccord entre le harnais de l'utilisateur et la ligne de vie de l'utilisateur (870) ou un élément du harnais de l'utilisateur à ladite ligne de vie (870) pour permettre au moins l'un parmi un glissement et un ancrage de l'élément respectif sur et le long de la ligne d'amarre (164) de chaque premier point de la ligne d'amarre (164) à chaque second point de la ligne d'amarre (164), le premier point et le second point étant définis entre les premier et deuxième raccords (150).

13. Procédé selon la revendication 1, ledit positionnement du premier dispositif d'ancrage de toit (100) comprenant l'étape consistant à
placer la ligne d'amarre (164) fixée sous tension au premier dispositif d'ancrage de toit (100) sur le toit (510) sur le deuxième bord (514) ; et
comprenant les étapes consistant à
fixer une extrémité de la ligne d'amarre (164) au deuxième dispositif d'ancrage de toit (100) à l'aide d'un dispositif de capture tout en maintenant la tension sur la ligne d'amarre (164) à partir du premier bord (514) du toit (510) ; et
soulever le deuxième dispositif d'ancrage de toit (100) jusqu'au deuxième bord (514) tout en maintenant ladite tension.
